# EUROPÄISCHE PATENTSCHRIFT

(11) **EP 0 508 235 B1**
(45) Veröffentlichungstag und Bekanntmachung des Hinweises auf die Patenterteilung: **01.03.1995**
(21) Anmeldenummer: 92105267.6
(22) Anmeldetag: 27.03.1992
(51) Int. Cl.: H04M 1/02

(54) **Türanlage, insbesondere Türsprechanlage**
Door installation especially door interphone
Dispositif de porte, spécialement interphone

(30) Priorität: 10.04.1991 DE 4111688
(43) Veröffentlichungstag der Anmeldung: 14.10.1992
(73) Patentinhaber: A. Grothe & Söhne KG, D-50969 Köln (DE)
(72) Erfinder: Boeser, Werner, Dipl.-Ing. (FH), W-5352 Zülpich (DE); Sella, Hans Adolf, W-5000 Köln 50 (DE)
(74) Vertreter: Gesthuysen, Hans Dieter, Dipl.-Ing.

(56) Entgegenhaltungen:
- DE-A- 3 108 056
- FR-A- 2 628 279
- PATENT ABSTRACTS OF JAPAN vol. 15, no. 108 (E-1045)14. März 1991
- PATENT ABSTRACTS OF JAPAN vol. 12, no. 461 (E-689)5. Dezember 1988
- PATENT ABSTRACTS OF JAPAN vol. 11, no. 220 (E-524)16. Juli 1987
- PATENT ABSTRACTS OF JAPAN vol. 12, no. 379 (E-667)11. Oktober 1988
- PATENT ABSTRACTS OF JAPAN vol. 8, no. 217 (E-270)4. Oktober 1984

## Beschreibung

Die Erfindung betrifft eine Türanlage, insbesondere Türsprechanlage, mit einem Gehäuse, einem rechteckigen Aufnahmerahmen, mehreren rechteckigen, vorzugsweise quadratischen Funktionseinheiten und ggf. Abdicht- und Verblendmitteln, wobei der Aufnahmerahmen im Gehäuse oder am Gehäuse vorgesehen und vorzugsweise schwenkbar und feststellbar mit dem Gehäuse verbunden ist und die Funktionseinheiten aufnimmt, wobei die Funktionseinheiten ein Gehäuse und ein Funktionselement oder mehrere Funktionselemente aufweisen und wobei ein Funktionselement als Kameraelement ausgebildet und in der zugehörigen Funktionseinheit schwenkbar angeordnet ist.

Türanlagen, insbesondere Türsprechanlagen sind seit vielen Jahren in unterschiedlichen Ausführungsformen bekannt (vgl. z. B. die DE-OSen 28 01 852, 29 21 485 und 31 08 056 sowie die FR-A- 2.122.912). Diese Türanlagen sind baukastenförmig aufgebaut; unterschiedliche Funktionseinheiten können modulartig zusammengesetzt werden.

Bei der bekannten Türanlage, von der die Erfindung ausgeht (vgl. die DE-OS 28 01 852), ist das als Kameraelement ausgebildete Funktionselement direkt am Aufnahmerahmen schwenkbar gelagert. Das hat die Folge, daß das als Kameraelement ausgebildete Funktionselement in bezug auf seine Neigung nur bei ausgebautem Aufnahmerahmen eingestellt werden kann.

Im übrigen ist ein Bildtelefon bekannt (vgl. die DE-OS 39 06 315), zu dem - selbstverständlich - ein Kameraelement gehört. Dabei ist das Kameraelement um eine horizontale Achse schwenkbar gelagert und von außen einstellbar.

Aus der Literaturstelle "PATENT ABSTRACTS OF JAPAN, vol. 11, no. 220 (E-524), 16.07.1987 & JP - A - 62 038 683" ist eine Türanlage bekannt, bei der neben den herkömmlichen Funktionselementen (Sprechanlage und Klingel) zusätzlich ein Funktionselement als schwenkbares Kameraelement ausgebildet ist.

Schließlich ist eine Video-Überwachungseinrichtung bekannt (vgl. das DE-GM 90 05 176), die - selbstverständlich - ein Kameraelement aufweist. Eine Einstellbarkeit des Kameraelements ist hier nicht verwirklicht.

Der Erfindung liegt nun die Aufgabe zugrunde, bei der Türanlage, von der die Erfindung ausgeht, die Einstellbarkeit des Kameraelements zu vereinfachen.

Die erfindungsgemäße Türanlage, bei der die zuvor aufgezeigte Aufgabe gelöst ist, ist nun dadurch gekennzeichnet, daß das Kameraelement ein Kameragehäuse aufweist, daß das Kameragehäuse an zwei gegenüberliegenden Seiten mit koaxial angeordneten Zapfen versehen ist, daß am Gehäuse des Kameraelements und an einem auf das Gehäuse des Kameraelements aufsetzbaren Deckel zweiteilige Lager ausgebildet sind und daß die Zapfen des Kameragehäuses in die Lager eingreifen. Erfindungsgemäß ist erreicht worden, daß bei komplett eingebauter Türanlage die Ausrichtung des Kameragehäuses und damit die Ausrichtung der Kamera eingestellt werden kann. Erforderlich ist dazu lediglich die von außen ohne weiteres mögliche Entfernung des auf das Gehäuse des Kameraelements aufgesetzten Deckels.

Je nach Einbau des als Kameraelement ausgebildeten Funktionselements in den Aufnahmerahmen erhält man für das Kameragehäuse eine horizontale oder eine vertikale Schwenkachse.

Bevorzugte Ausgestaltungen und Weiterbildungen der erfindungsgemäßen Türanlage sind in den dem Patentanspruch 1 nachgeordneten Patentansprüchen beschrieben. Im übrigen wird im folgenden ein bevorzugtes Ausführungsbeispiel der Erfindung anhand einer Zeichnung näher erläutert. In der Zeichnung zeigt
- Fig. 1: teilweise geschnitten, eine Seitenansicht einer Türanlage nach der Lehre der Erfindung,
- Fig. 2: in perspektivischer Sprengdarstellung eine mit einem Kameraelement als Funktionselement ausgestattete Funktionseinheit einer Türanlage,
- Fig. 3 A: in Frontansicht das in Fig. 3 A dargestellte Kameraelement,
- Fig. 3 B: teilweise geschnitten, in Seitenansicht das in Fig. 3 A dargestellte Kameraelement,
- Fig. 3 C: in Draufsicht das in Fig. 3 A dargestellte Kameraelement,
- Fig. 4 A: in Frontansicht ein Gehäuse der in Fig. 2 dargestellten Funktionseinheit,
- Fig. 4 B: eine Seitenansicht des in Fig. 4 A dargestellten Gehäuses und
- Fig. 4 C: den in Fig. 4 A angedeuteten Schnitt IV - IV.

Gegenstand der Erfindung ist eine Türanlage, insbesondere eine Türsprechanlage, die in ihrem grundsätzlichen Aufbau aus einem - nicht dargestellten - Gehäuse, aus einem rechteckigen Aufnahmerahmen 1, aus mehreren rechteckigen, im dargestellten Ausführungsbeispiel drei quadratischen Funktionseinheiten 2, 3, 4 und aus - nicht dargestellten - Abdicht- und Verblendmitteln besteht. Bezüglich Einzelheiten des - nicht dargestellten - Gehäuses, der Funktionseinheiten 2, 3, 4 und der - nicht dargestellten - Abdicht- und Verblendmittel wird ausdrücklich auf die DE-0S 31 08 056 verwiesen.

Da die Figuren das zu der erfindungsgemäßen Türanlage gehörende Gehäuse nicht zeigen, kann der Zeichnung auch nicht entnommen werden, daß der Aufnahmerahmen 1 im Gehäuse oder am Gehäuse vorgesehen und vorzugsweise schwenkbar und feststellbar mit dem Gehäuse verbunden ist.

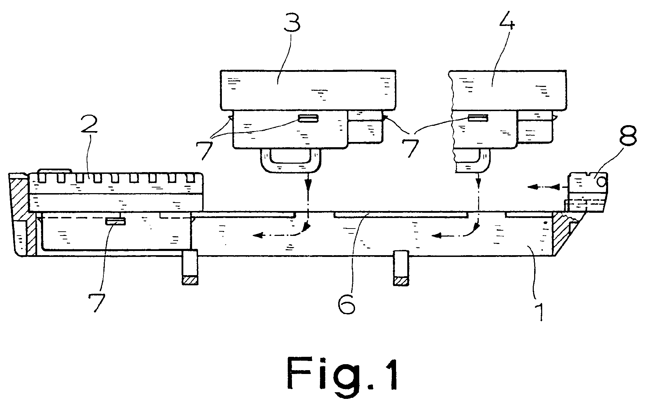

Wie die Fig. 1 zeigt, nimmt der Aufnahmerahmen 1 die Funktionseinheiten 2, 3, 4 auf, wobei die Funktionseinheiten 2, 3, 4, wie im einzelnen in der DE-OS 31 08 056 ausgeführt, jeweils ein Funktionselement oder mehrere Funktionselemente aufweisen können; als Funktionselemente können ein Lautsprecher, ein Mikrofon, Namensschiler und Klingeltasten verwirklicht sein. Der Aufnahmerahmen 1 weist innenseitig der Fixierung der Funktionseinheiten 2, 3, 4 dienende Rastschienen 6 auf. Die Funktionseinheiten 2, 3, 4 sind mit den Rastschienen 6 des Aufnahmerahmens 1 zugeordneten, im eingebauten Zustand die Rastschienen 6 des Aufnahmerahmens 1 hintergreifende Rastelemente 7 versehen. Im einzelnen weisen die Rastschienen 6 des Aufnahmerahmens 1 einen rechteckigen Querschnitt auf und liegen die Rastschienen 6 an der nach außen gerichteten Seite des Aufnahmerahmens 1 in der äußeren Hauptebene des Aufnahmerahmens 1. Die Funktionseinheiten 2, 3, 4 sind durch ein hier als Anschlagleiste 8 ausgebildetes Arretierungsmittel im Aufnahmerahmen 1 arretierbar.

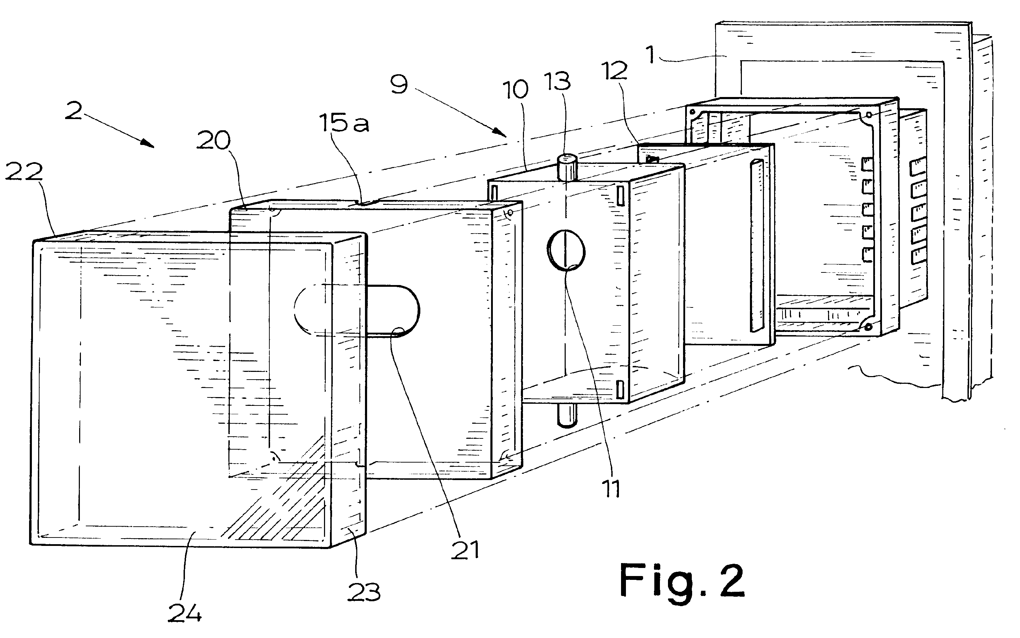

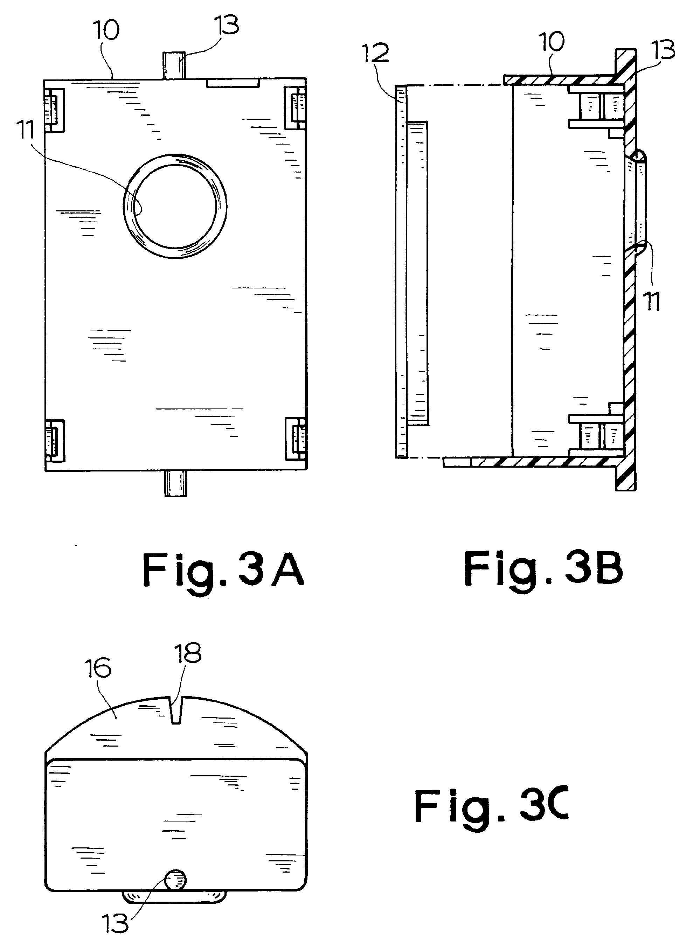

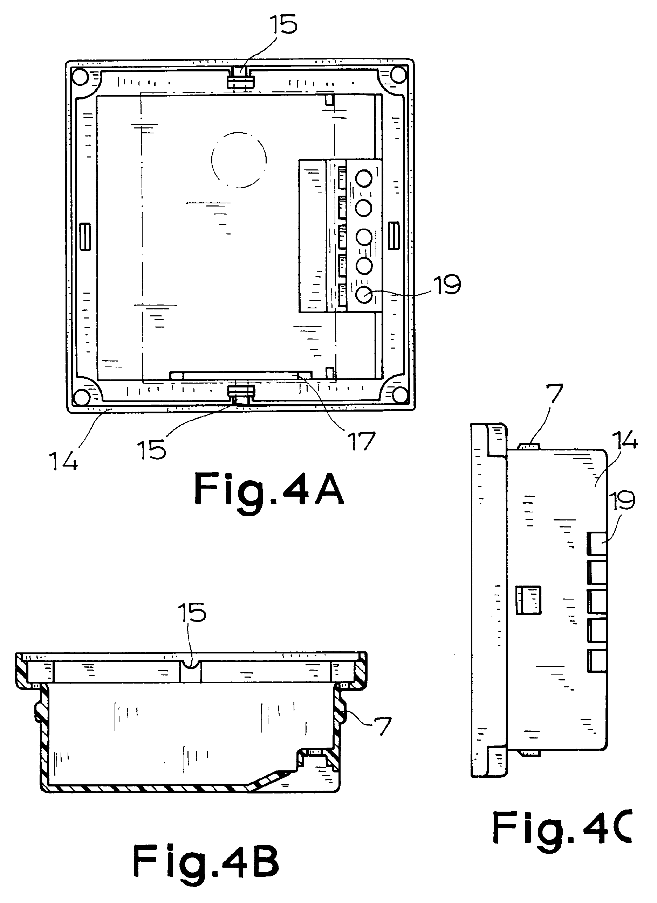

Wie die Fig. 2 bis 4 C zeigen, ist ein Funktionselement als schwenkbares Kameraelement 9 ausgebildet, das in der zugehörigen Funktionseinheit schwenkbar gelagert ist. Der Aufbau einer mit einem als schwenkbares Kameraelement 9 ausgestatteten Funktionseinheit ist in Fig. 2 in Sprengdarstellung dargestellt. Zu dem Kameraelement 9 gehört zunächst ein Kameragehäuse 10, das zur Aufnahme einer Kamera dient. Das Kameragehäuse 10 weist eine im wesentlichen runde Sichtöffnung 11 für die Kamera auf und ist an seiner der Sichtöffnung 11 gegenüberliegenden Seite durch eine abnehmbare Rückplatte 12 geschlossen (vgl. Fig. 3 A und 3 B). In den Fig. 2, 3 A, 3 B und 3 C ist nun erkennbar, daß an dem Kameragehäuse 10 an zwei gegenüberliegenden Seiten koaxial angeordnete Zapfen 13 vorgesehen sind. Die Zapfen 13 stehen zur schwenkbaren Lagerung des Kameraelements 9 mit an einem Gehäuse 14 der Funktionseinheit vorgesehenen Lagern 15 in Eingriff (vgl. Fig. 4 A). Zur weiteren Führung der Schwenkbewegung des Kameraelements 9 ist am Kameragehäuse 10 mindestens ein Führungselement 16 und am Gehäuse 14 der Funktionseinheit ein dem Führungselement 16 zugeordnetes Führungsgegenstück 17 vorgesehen. Das Führungselement 16 und das Führungsgegenstück 17 stehen miteinander in Eingriff. Dabei ist das Führungselement 16 im hier dargestellten und insofern bevorzugten Ausführungsbeispiel als ein im wesentlichen scheibenförmiger Fortsatz mit einer kreisbogenförmigen Außenkontur ausgebildet, während das Führungsgegenstück 17 als eine in der Schwenkebene des Führungselements 16 liegende schlitzförmige Ausnehmung ausgeführt ist. Am Führungselement 16 ist ein Begrenzungselement 18 vorgesehen, das, wie in Fig. 3 C erkennbar ist, als schlitzförmige Ausnehmung in dem scheibenförmigen Fortsatz ausgebildet ist. An dem Gehäuse 14 der Funktionseinheit ist ein zu dem Begrenzungselement 18 korrespondierendes - nicht dargestelltes - Begrenzungsgegenstück ausgebildet, das beispielsweise als Pin oder schmale Platte ausgebildet sein kann und mit dem Begrenzungselement 18 so in Eingriff steht, daß eine Schwenkbeewgung des Kameraelements 9 - hier durch die Flanken der schlitzförmigen Ausnehmung - begrenzt wird.

In der Fig. 4 A ist gezeigt, daß in dem Gehäuse 14 Anschlußklemmen 19 für die elektrische Versorgung der Kamera vorgesehen sind.

Wie die Fig. 2 sowie 4 A und 4 B zeigen, sind die Lager 15 für das Kameraelement 9 nicht einteilig am Gehäuse 14 der Führungseinheit vorgesehen, sondern als zweiteilige Lager ausgebildet; sie werden durch einen auf das Gehäuse 14 der Funktionseinheit aufsetzbaren Deckel 10 mit daran vorgesehenen, entsprechend als Ausnehmungen ausgebildeten Gegenstücken 15 a geschlossen. Der Deckel 20 weist eine Sichtöffnung 21 für die Kamera auf, die dem Schwenkbereich des Kameraelements 9 angepaßt ist. Im in Fig. 2 dargestellten Ausführungsbeispiel ist das Kameraelement 9 um eine vertikal liegende Achse schwenkbar angeordnet; entsprechend ist die Sichtöffnung 21 in dem Deckel 20 als längliche, sich in horizontaler Richtung erstreckende Ausnehmung mit abgerundeten Enden ausgebildet.

Schließlich gehört zu der mit einem Kameraelement 9 ausgestatteten Funktionseinheit ein Schutzdeckel 22 mit einem Rahmen 23. Der Schutzdeckel 22 ist auf das Gehäuse 15 der Funktionseinheit aufsetzbar und mit diesem fest verbindbar, vorzugsweise verschraubbar, und besteht im wesentlichen aus einem durchsichtigen Material, vorzugsweise aus Glas oder Acrylglas. Der Rahmen 23 des Schutzdeckels 22 kann dabei auch aus anderem Material, beispielsweise aus Kunststoff bestehen.

Die Lehre der Erfindung beschränkt sich selbstverständlich nicht auf das zuvor erläuterte Ausführungsbeispiel, bei dem das Kameraelement 9 um lediglich eine einzige, hier vertikal liegende Achse schwenkbar ist. Es ist durchaus denkbar, das Kameraelement 9 um mehrere Achsen schwenkbar zu lagern oder auch ein frei bewegliches Gelenk vorzusehen, beispielsweise ein Kugel- oder ein Kreuzgelenk, so daß das Kameraelement 9 in der Funktionseinheit frei beweglich ist. Die freie Beweglichkeit kann auch dadurch erzielt werden, daß das Kameraelement 9 in dem Gehäuse 14 der Funktionseinheit wie im Ausführungsbeispiel gezeigt, schwenkbar gelagert ist, die Funktionseinheit selbst aber auch schwenkbar im Aufnahmerahmen 1 der Türanlage angeordnet ist.

## Patentansprüche

1. Türanlage, insbesondere Türsprechanlage, mit einem Gehäuse, einem rechteckigen Aufnahmerahmen (1), mehreren rechteckigen, vorzugsweise quadratischen Funktionseinheiten (2, 3, 4) und ggf. Abdicht- und Verblendmitteln, wobei der Aufnahmerahmen im Gehäuse oder am Gehäuse vorgesehen und vorzugsweise schwenkbar und feststellbar mit dem Gehäuse verbunden ist und die Funktionseinheiten aufnimmt, wobei die Funktionseinheiten ein Gehäuse und ein Funktionselement oder mehrere Funktionselemente aufweisen und wobei ein Funktionselement als Kameraelement (9) ausgebildet und in der zugehörigen Funktionseinheit schwenkbar angeordnet ist, **dadurch gekennzeichnet**, daß das Kameraelement (9) ein Kameragehäuse (10) aufweist, daß das Kameragehäuse (10) an zwei gegenüberliegenden Seiten mit koaxial angeordneten Zapfen (13) versehen ist, daß am Gehäuse (14) des Kameraelements (9) und an einem auf das Gehäuse (14) des Kameraelements (9) aufsetzbaren Deckel (20) zweiteilige Lager (15, 15a) ausgebildet sind und daß die Zapfen (13) des Kameragehäuses (10) in die Lager (15, 15a) eingreifen.

2. Türanlage nach Anspruch 1, dadurch gekennzeichnet, daß das Kameragehäuse (10) eine im wesentlichen runde Sichtöffnung (11) für die Kamera aufweist.

3. Türanlage nach Anspruch 2, dadurch gekennzeichnet, daß das Kameragehäuse (10) an seiner der Sichtöffnung (11) gegenüberliegenden Seite durch eine abnehmbare Rückplatte (12) geschlossen ist.

4. Türanlage nach einem der Ansprüche 1 bis 3, dadurch gekennzeichnet, daß an dem Kameragehäuse (10) mindestens ein Führungselement (16) und an dem Gehäuse (14) der Funktionseinheit ein dem Führungselement (16) zugeordnetes Führungsgegenstück (17) zur Führung des Kameraelements (9) in der Funktionseinheit in Eingriff miteinander stehen.

5. Türanlage nach Anspruch 4, dadurch gekennzeichnet, daß das Führungselement (16) als ein im wesentlichen scheibenförmiger Fortsatz mit einer kreisbogenförmigen Außenkontur ausgebildet ist.

6. Türanlage nach Anspruch 4 oder 5, dadurch gekennzeichnet, daß das Führungsgegenstück (17) als eine in der Schwenkebene des Führungselements (16) liegende schlitzförmige Ausnehmung ausgebildet ist.

7. Türanlage nach einem der Ansprüche 4 bis 6, dadurch gekennzeichnet, daß an dem Führungselement (16) ein Begrenzungselement (18) vorgesehen ist.

8. Türanlage nach Anspruch 7, dadurch gekennzeichnet, daß an dem Gehäuse (14) der Funktionseinheit ein dem Begrenzungselement (18) entsprechendes Begrenzungsgegenstück ausgebildet ist und das Begrenzungsgegenstück zusammen mit dem Begrenzungselement (18) die Schwenkbewegung des Kameraelements (9) auf einen maximalen Schwenkbereich begrenzt.

9. Türanlage nach einem der Ansprüche 1 bis 8, dadurch gekennzeichnet, daß der Deckel (20) eine Sichtöffnung (21) für die Kamera aufweist und die Sichtöffnung (21) an den Schwenkbereich des Kameraelements (9) angepaßt ist.

10. Türanlage nach einem der Ansprüche 2 bis 9, dadurch gekennzeichnet, daß die Funktionseinheit an ihrer die Sichtöffnung (11) aufweisenden Seite durch einen Schutzdeckel (22) geschlossen wird.

11. Türanlage nach Anspruch 10, dadurch gekennzeichnet, daß der Schutzdekkel (22) im wesentlichen aus einem durchsichtigen Material, vorzugsweise aus Glas oder Acrylglas besteht.

## Claims

1. A door installation, particularly a door communications unit, with a housing, a rectangular locating frame (1), a plurality of rectangular, preferably square, functional units (2, 3, 4) and optionally sealing and facing means, wherein the locating frame is provided in the housing or on the housing and is preferably pivotally attached and fixable to the housing and receives the functional units, wherein the functional units comprise a housing and one functional unit or a plurality of functional units and wherein one functional element is constructed as a camera element (9) and is pivotally disposed in the associated functional unit, characterised in that the camera element (9) has a camera housing (10), that the camera housing (10) is provided with coaxially disposed spigots (13) on two opposite sides, that two-piece bearings (15, 15a) are constructed on the housing (14) of the camera element (9) and on a cover (20) which can be placed on the housing (14) of the camera element (9), and that the spigots (13) of the camera housing (10) engage in the bearings (15, 15a).

2. A door installation according to claim 1, characterised in that the camera housing (10) has a substantially round optical aperture (11) for the camera.

3. A door installation according to claim 2, characterised in that the camera housing (10) is closed on its side opposite the optical aperture (11) by a removable backplate (12).

4. A door installation according to any one of claims 1 to 3, characterised in that at least one guide element (16) on the camera housing (10) and an opposing guide piece (17) on the housing (14) of the functional unit, which opposing guide piece is associated with the guide element (16), are in engagement with each other in the functional unit for the guidance of the camera element (9).

5. A door installation according to claim 4, characterised in that the guide element (16) is constructed as a substantially plate-shaped extension with a circularly arcuate external profile.

6. A door installation according to claim 4 or 5, characterised in that the opposing guide piece (17) is constructed as a slot-shaped recess situated in the plane of pivoting of the guide element (16).

7. A door installation according to any one of claims 4 to 6, characterised in that a limiting element (18) is provided on the guide element (16).

8. A door installation according to claim 7, characterised in that a limiting counter-piece corresponding to the limiting element (18) is constructed on the housing (14) of the functional unit, and together with the limiting element (18) the limiting counter-piece limits the pivoting movement of the camera element (9) to a maximum range of pivoting.

9. A door installation according to any one of claims 1 to 8, characterised in that the cover (20) has an optical aperture (21) for the camera and the optical aperture (21) is matched to the range of pivoting of the camera element (9).

10. A door installation according to any one of claims 2 to 9, characterised in that the functional unit is closed by a protective cover (22) on its side which has the optical aperture (11).

11. A door installation according to claim 10, characterised in that the protective cover (22) substantially consists of a transparent material, preferably of glass or of acrylic glass.

## Revendications

1. Installation pour porte, en particulier interphone, comprenant un logement, un cadre de réception rectangulaire (1), plusieurs unités fonctionnelles (2, 3, 4) rectangulaires, de préférence carrées, et éventuellement des agents d'étanchéification et de parement, dans laquelle le cadre de réception est prévu dans le logement ou contre le logement et est relié au logement de préférence en pivotement et de façon à pouvoir y être fixé, et les unités fonctionnelles venant s'y loger, dans laquelle les unités fonctionnelles présentent un logement et un ou plusieurs éléments fonctionnels et dans laquelle un élément fonctionnel est réalisé en élément de caméra (9) et est disposé en pivotement dans l'unité fonctionnelle correspondante, caractérisée en ce que l'élément de caméra (9) présente un logement de caméra (10), en ce que le logement de caméra (10) est muni de tourillons (13) arrangés en position coaxiale, sur deux côtés opposés, en ce que, contre le logement (14) de l'élément de caméra (9) et contre un couvercle (20) qui peut venir se disposer par-dessus le logement (14) de l'élément de caméra (9), sont réalisés des paliers en deux parties (15, 15a), et en ce que les tourillons (13) du logement de caméra (10) viennent s'engrener dans les paliers (15, 15a).

2. Installation pour porte selon la revendication 1, caractérisée en ce que le logement de caméra (10) présente une ouverture de vision (11) essentiellement ronde pour la caméra.

3. Installation pour porte selon la revendication 2, caractérisée en ce que le logement de caméra (10) est fermé sur son côté opposé à l'ouverture de vision (11), par une plaque dorsale amovible (12).

4. Installation pour porte selon l'une quelconque des revendications 1 à 3, caractérisée en ce que, contre le logement de caméra (10), au moins un élément de guidage (16) et, contre le logement (14) de l'unité fonctionnelle, une pièce de guidage complémentaire (17) correspondant à l'élément de guidage (16) sont mutuellement engrenés pour le guidage de l'élément de caméra (9) dans l'unité fonctionnelle.

5. Installation pour porte selon la revendication 4, caractérisée en ce que l'élément de guidage (16) est réalisé en un prolongement essentiellement en forme de plaque, comportant un contour externe en forme d'arc de cercle.

6. Installation pour porte selon la revendication 4 ou 5, caractérisée en ce que la pièce de guidage complémentaire (17) est réalisée sous forme d'un évidement en forme de fente pratiqué dans le plan de pivotement de l'élément de guidage (16).

7. Installation pour porte selon l'une quelconque des revendications 4 à 6, caractérisée en ce qu'on prévoit, contre l'élément de guidage (16), un élément de limitation (18).

8. Installation pour porte selon la revendication 7, caractérisée en ce que, contre le logement (14) de l'unité fonctionnelle, est réalisé un élément de limitation complémentaire correspondant à l'élément de limitation (18), et l'élément de limitation complémentaire, conjointement avec l'élément de limitation (18), limite le mouvement de pivotement de l'élément de caméra (9) à un domaine de pivotement maximal.

9. Installation pour porte selon l'une quelconque des revendications 1 à 8, caractérisée en ce que le couvercle (20) présente une ouverture de vision (21) pour la caméra et l'ouverture de vision (21) est adaptée au domaine de pivotement de l'élément de caméra (9).

10. Installation pour porte selon l'une quelconque des revendications 2 à 9, caractérisée en ce que l'unité fonctionnelle est fermée, sur son côté présentant l'ouverture de vision (11), par un couvercle de protection (22).

11. Installation pour porte selon la revendication 10, caractérisée en ce que le couvercle de protection (22) est constitué essentiellement d'une matière transparente, de préférence du verre ou du verre acrylique.
